# EUROPEAN PATENT APPLICATION

(11) **EP 0 969 367 A2**
(43) Date of publication of application: **05.01.2000**
(21) Application number: 99303930.4
(22) Date of filing: 20.05.1999
(51) Int. Cl.: G06F 9/46

(54) **System and method used in a computer system for distributing tasks between multiprocessing I/O subsystems**

(30) Priority: 28.05.1998 US 86795
(71) Applicant: Compaq Computer Corporation, Houston, Texas 77070-2698 (US)
(72) Inventor: Olarig, Sompong P., Cypress, Texas 77429 (US); Purcell, Brian T., Tomball, Texas 77375 (US)
(74) Representative: Brunner, Michael John

(57) **Abstract**

A load balancing system and method for distributing a task between Input/Output subsystems of a computer system. The load balancing system includes a central processing unit for transmitting the task to a central controller. The central controller in response to the transmitted task generates and transmits a request command over a side-band bus to a plurality of peripheral components. Each of the peripheral components that are capable of servicing the request command will transmit a response signal over the side-band bus back to the central controller. Thereafter, the central controller by processing all the response signals dispatches a service command signal to one of the capable peripheral components. The service command signal will direct the one capable peripheral component to service the task.

## Description

The present invention relates to a system and method for distributing tasks between multiprocessing I/O subsystems of a computer system and, in particular, to a system and method using side-band signaling to provide low overhead load balancing among dedicated I/O processors.

A computer system having multiple central processing units (CPUs) that are capable of operating in a cooperative fashion on several tasks at one time is referred to as a multiprocessing system. The multiprocessing system is often incorporated within equipment such as desktops, servers or high-end workstations.

Currently, one of the most significant design challenges associated with the multiprocessing system is the routing and processing of tasks. The multiprocessing system generates one task in response to receiving an interrupt, where the interrupt can be characterized as an asynchronous event occurring independently of any task currently running and requiring the attention of one of the CPUs. The processing of the task or action taken by one of the CPUs in response to receiving the interrupt is commonly known as "servicing" or "handling" the interrupt.

Traditionally, the multiprocessing system will balance or distribute the interrupts and corresponding tasks among the various CPUs to increase system performance. More specifically, the load balancing or distribution of tasks is accomplished in a manner where the least busy CPU is used to service the interrupt. The least busy CPU will generally handle the interrupt in the least amount of time by using a dedicated bus (e.g., Advanced Programmable Interrupt Controllers (APIC) bus). The conventional techniques for load balancing or distributing tasks among CPUs in multiprocessing systems include SystemPro, APIC, OpenPIC and Distributed OpenPIC. However, the conventional load balancing techniques are laden with software overhead resulting in the delay of data transfers and reducing the amount of application processing the CPUs can accomplish.

To reduce the workload on the CPUs, an alternative I/O system commonly known as Intelligent Input/Output (120) System has been developed in the computer industry. The Intelligent I2O System is particularly advantageous in that it off-loads portions of work (e.g., interrupt/tasks) onto intelligent I/O subsystems, which frees the CPUs to handle more critical tasks. The intelligent I/O subsystems include dedicated I/O processors (lOPs) for performing details such as interrupt handling, buffering and data transfers. However, there is no industry standard for the load balancing or distribution of tasks at the level of the intelligent I/O subsystems.

Accordingly, there is a need for a system and method for distributing tasks between intelligent I/O subsystems of a multiprocessing system. There is also a need for a system and method having a dedicated side-band bus to provide low overhead load balancing between multiple I/O processors within an Intelligent I2O System. Additionally, a system having a dedicated side-band bus is needed to improve scalability. These and other needs are satisfied by the load balancing system and method of the present invention.

The present invention is a method and load balancing system for distributing a task between input/output subsystems of a computer system. The load balancing system includes a central processing unit for transmitting the task to a central controller. The central controller in response to the transmitted task generates and transmits a request command over a side-band bus to a plurality of peripheral components. Each of the peripheral components that are capable of servicing the request command will transmit a response signal over the side-band bus back to the central controller. Thereafter, the central controller by processing all the response signals dispatches a service command signal to one of the capable peripheral components. The service command signal will direct the one capable peripheral component to service the task.

A more complete understanding of the method and apparatus of the present invention may be had by reference to the following detailed description when taken in conjunction with the accompanying drawings wherein:
FIGURE 1 is a block diagram of a computer system incorporating a first embodiment of a load balancing system in accordance with the present invention;
FIGURE 2 is a block diagram of the computer system incorporating a second embodiment of the load balancing system;
FIGURE 3 is a signaling diagram illustrating a run-time operation on a side-band bus of the load balancing system shown in FIGURES 1 and 2; and
FIGURE 4 is a simplified flow diagram of an operation of the load balancing system shown in FIGURES 1 and 2.

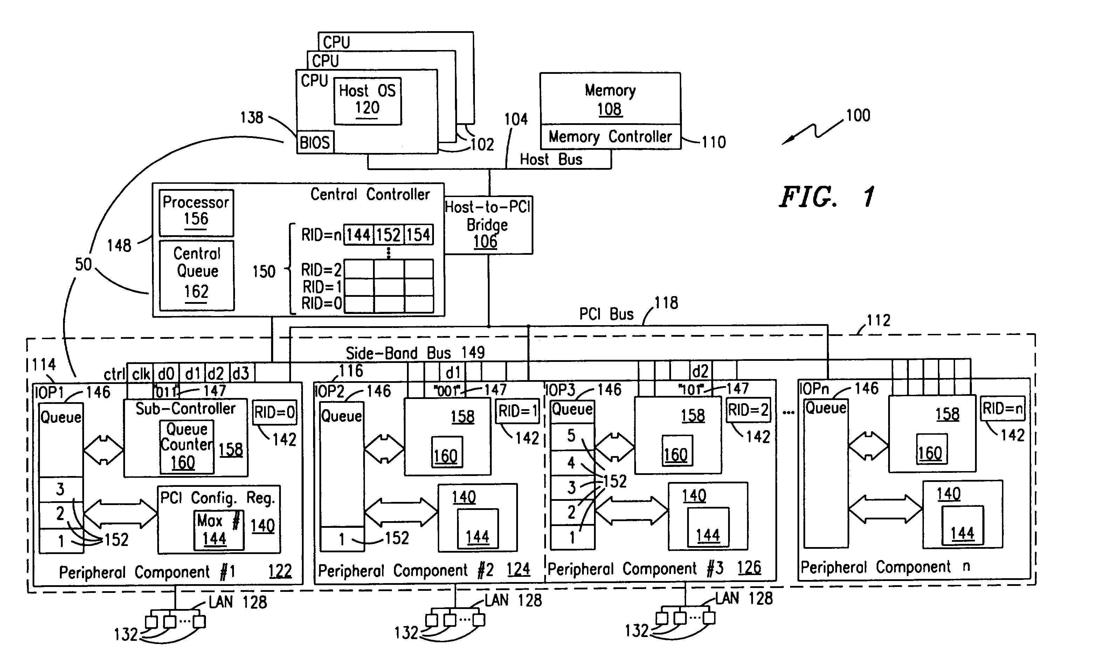

Referring to the Drawings, wherein like numerals represent like parts throughout FIGURES 1-4, there are disclosed two embodiments of an exemplary load balancing system 50, which can be used to implement the present invention.

Although a computer system 100 embodying the load balancing system 50 of the present invention will be discussed based on the intelligent I2O specification, it should be understood that the intelligent I2O specification is only one of many standards and architectures having I/O subsystems that may utilize the principles of the present invention. Accordingly, the load balancing system 50 described should not be construed in such a limited manner.

Referring to FIGURE 1, there is illustrated a block diagram of the computer system 100 incorporating a first embodiment of the load balancing system 50. Excluding the load balancing system 50, the general architecture of the computer system 100 is based substantially on the intelligent I2O specification, which is hereby incorporated by reference into this specification.

For clarity, certain details associated with the intelligent I2O system including, for example, the split driver model, the Integrated Real Time Operating System and the Peer-to-Peer communication scheme are well known in the industry and as such are not described herein. Therefore, the description provided below in relation the intelligent I2O system describes only the basic components that interact with the load balancing system 50.

The conventional intelligent I2O architecture includes one or more central processing unit(s) 102 communicating across a host bus 104 with a North Bridge or Host-to-PCI bridge 106, and a memory controller 110 coupled with memory 108. The intelligent I2O architecture also has a plurality of Input/Output Processors (lOPs) 112, including a first IOP 114 and a second IOP 116 both of which communicate with the Host-to-PCI bridge 106 across a peripheral component interface (PCI) bus 118. A host operating system 120 generally controls the operation of the CPUs 102.

The first IOP 114 may incorporate a first peripheral component 122, and the second IOP 116 may incorporate a second peripheral component 124 and a third peripheral component 126. The second IOP 116 is considered multi-functional, because of the presence of two peripheral components 124 and 126; of course, any of the lOPs 112 may be multi-functional by having more than one peripheral component. Peripheral components 122, 124 and 126 can be any type of PCI base adapter including, for example, a Local Area Network (LAN) controller, a Small Computer Systems Interface controller (SCSI) or a Redundant Array of Independent Drives controller (RAID). In addition, the individual lOPs 112 are considered PCI based adapters or discrete input/output subsystems in computer systems having architectures different than that specified by the Intelligent I/O (I2O) Architecture specification.

For illustrative purposes, the peripheral component 122, 124 and 126 are designated as LAN controllers coupled to independent LAN buses 128 for controlling communications. Each of the LAN buses 128 supports a plurality of LAN components 132. Of course, either of the peripheral components 122, 124 or 124 may be any type of PCI base adapter such as a SCSI controller for supporting a multiple of SCSI components (not shown). Although the second IOP 116 is illustrated as supporting two peripheral components 124 and 126, again it is understood that each IOP may support any number and type of peripheral component.

The load balancing system 50 is used within the computer system 100 for distributing a task to one of the lOPs 112 or peripheral components 122, 124 or 126. In general, the task is generated within one of the CPUs 102 in response to receiving an interrupt, and then the task is transmitted to one of the IOPs 112 for processing to off-load a portion of work from the CPUs. The exemplary load balancing system 50 is discussed in greater detail below.

During initialization or Power On Self Test("POST") of the computer system 100, the startup configuration software scans the PCI bus 118 or buses to determine what PCI devices 112 exist and what configuration requirements they may have. This process is commonly referred to as enumerating, scanning, walking or probing the PCI bus 118. The process may also be referred to as the discovery process. The software program which performs the discovery process may be referred to as a PCI bus enumerator. The PCI device enumeration is done via PCI bus transactions to scan a PCI configuration register 140 within the peripheral components 122, 124 and 126 to determine which of the peripheral components are configured to participate in the load balancing scheme in the first place. The peripheral components 122, 124 and 126 configured for load balancing are then assigned an unique response identifier (RID), for example, the peripheral components 122, 124 and 126 may have RIDs 142 with logical values of "0", "1" and "2", respectively. The PCI bus enumerator also scans each of the PCI configuration registers 140 to determine a maximum number of queued tasks 144 that can be stored or queued at any given time within a peripheral queue 146 of each peripheral component 122, 124 and 126.

Furthermore, the PCI configuration registers 140 include a configuration space having a task capability register, a maximum queue depth register and a current queue depth register.

After initialization of the computer system 100, a central controller 148 coupled to the Host-to-PCI bridge 106 receives the task distributed from one of the CPUs 102. The central controller 148 uses a side-band bus 149 to communicate with the peripheral components 122, 124 and 126. The central controller 148 includes a configuration table 150 having a set of 64-bit wide registers that are indexed by the RIDs 142, each register stores a current number of queued tasks 152, the maximum number of queued tasks 144, and a bit pattern 154. In addition, the configuration table 150 includes a configuration space containing a maximum number of queueable or pending tasks register, a current number of tasks register and a task capability register.

Each bit pattern 154 is representative of a class or group of tasks that a corresponding peripheral component 122, 124 or 126 is capable of servicing for the load balancing system 50. For example, if the first peripheral component 122 was configured to handle a particular task then one of the bits would be set to "1" in the bit pattern 154; in contrast, if the first peripheral component was not configured to service the particular task then the one bit would be set to "0".

Furthermore, each of the 64-bit wide registers may have a form such that the lower 32-bits are reserved for storing the bit pattern 154, and the upper 32 bits are evenly divided for storing the current number of queued tasks 152 and the maximum number of queued tasks 144. Of course, the configuration table 150 may have different forms besides the 64-bit wide registers described above.

The central controller 148 also includes a processor 156 for masking out the peripheral components 122, 124 or 126 that are not capable of servicing the transmitted task by comparing the respective bit pattern 154 to the task that is to be serviced next. The processor 156 then transmits a request command (e.g., multicast signal) to each of the capable peripheral components 122, 124 or 126. Assuming, the second peripheral component 124 was configured for SCSI operations instead of the illustrated LAN operations then the second peripheral component would not be capable of servicing the task, and as such would be masked out by the processor 156.

Upon receiving the request command, the capable peripheral components 122, 124 or 126 transmit a response signal 147 over the side-band bus 149 to the central controller 148. More specifically, the response signal 147 is transmitted by a sub-controller 158 located within each peripheral component 122, 124 and 126. The sub-controller 158 may be referred to as an asymmetric multiprocessing I/O processing with I2O capability (AMIOPIC) sub-controller. The sub-controller 158 also includes a queue counter 160 that operates to keep track of the current number of queued tasks 152 presently located within the peripheral queue 146.

For example, if the task is distributed to the first peripheral component 122, then the respective sub-controller 158 will place the task within the peripheral queue 146 and increment the queue counter 160 by one. Likewise, the queue counter 160 will be decremented by the sub-controller 158 when any of the queued tasks have been completed and/or removed from the peripheral queue 146.

The response signals 147 transmitted by the sub-controllers 158 of the capable peripheral components 122, 124 or 126 are received and processed by the central controller 148. In processing the response signals 147, the central controller 148 will arbitrate and dispatch a service command signal to one of the capable peripheral components 122, 124 or 126. The service command signal will direct the one capable peripheral component 122, 124 or 126 to service the task. More particularly, the processor 156 compares all of the current number of queued tasks 152 to the corresponding maximum number of queued tasks 144 currently stored in the configuration table 150 to determine the one capable peripheral component 122, 124 or 126. The one capable peripheral component 122, 124 or 126 has a least number of current tasks relative to the maximum number of queued tasks 144.

In the event all of the capable peripheral components 122, 124 and 126 have the current number of queued tasks 152 greater than or equal to the maximum number of queued tasks 144, then the central controller 148 will place the task on a central queue 162. The task will remain on the central queue 162 until anyone of the capable peripheral components 122, 124 or 126 becomes available, thereafter, the task or service command signal is distributed to that particular peripheral component. The capable peripheral component 122, 124 or 126 is considered available when the current number of queued tasks 152 falls below the maximum number of queued tasks 144.

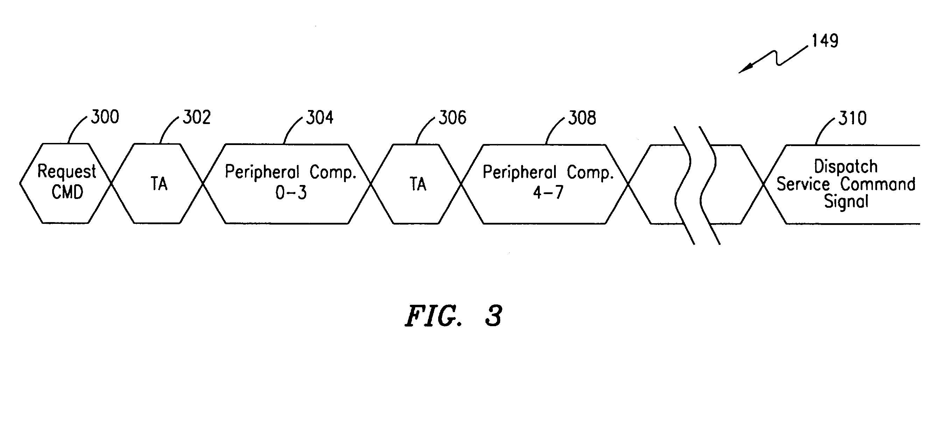

As mentioned earlier and now described in more detail, the side-band bus 149 includes multiple data lines (d0-d3), a control (CTRL) line and a clock (CLK) line having a predetermined frequency. The frequency (e.g., 25-66 MHZ) of the clock line is generally synchronous to the speed or frequency of the PCI Bus 118. The side-band bus 149 includes a predetermined number of pins (e.g., six are shown) for allowing a scalable protocol, which will be discussed in more detail with reference to FIGURE 3. The side-band bus 149 may be referred to as an asymmetric multiprocessing I/O processing with I2O capability (AMIOPIC) bus.

Also mentioned earlier was the fact that each of the configured peripheral components 122, 124 and 126 are assigned the unique RID 142 and, more specifically, the unique RIDs define when and on which data line (d0-d3) each of the peripheral components will respond to queries by the central controller 148. For example, the second peripheral component 124 is assigned the unique RID 142 having a value of "1" and as such the second peripheral component will utilize the data line (d1), CLK and CTRL lines for communicating with the central controller 148. Similarly, the third peripheral component 126 will use the data line (d2), CLK and CTRL lines for communication purposes (e.g., response signal), because the third peripheral component is assigned the unique RID 142 having a value of "2".

For illustrative purposes, the peripheral queue 146 of the first peripheral component 122 has three tasks that are queued to be processed by the first peripheral component, where the current number of queued tasks 152 having a value of three in binary form "011" is transmitted to the central controller 148 by one of the response signals 147 on the data line (dO). Likewise, the second peripheral component 124 has one task currently queued, where the current number of queued tasks 152 having a binary form "001" is transmitted by another of the response signals 147 on data line (d1). Lastly, the third peripheral component 126 has five tasks that are currently queued, where the current number of queued tasks 152 having a binary form "101" is transmitted by yet another of the response signals 147 on data line (d2). In the present example, the second peripheral component 124, will receive the task or service command signal from the central controller 148, because the second peripheral component has the least number of tasks currently awaiting to be serviced, assuming all of the maximum number of queued tasks 144 have the same value.

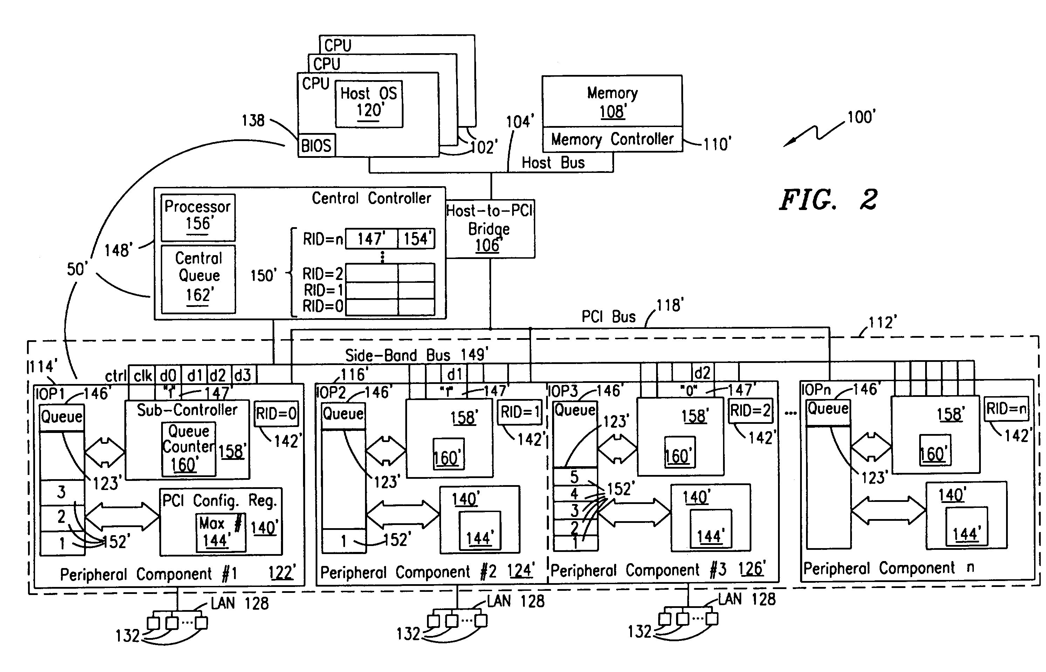

Reference is now made to FIGURE 2, where a second embodiment of the load balancing system 50 is illustrated using prime referenced numbers. The load balancing system 50' is similar to the first embodiment except for the form of the response signals generated by the peripheral components 122', 124' and 126'. Also, the sub-controllers 158' of the second embodiment compare the current number of queued tasks 152' to the maximum number of queued tasks 144', instead of making the comparison at the central controller 148 of the first embodiment.

Referring to FIGURE 2, there is illustrated a block diagram of the computer system 100' incorporating the second embodiment of the load balancing system 50'. For clarity, only the differences between the first embodiment and the second embodiment of the present invention will be described. As such, reference is made to the central controller 148' and the peripheral components 122', 124' and 126' for the following discussion.

Each peripheral queue 146' of the peripheral components 122', 124' and 126' includes a level priority mark 123'. The level priority mark 123' is generally below the maximum number of queued tasks 144 (first embodiment).

Upon receiving the request command (e.g., multicast signal) from the central controller 148', each of the sub-controllers 158' compares the current number of queued tasks 152' to the level priority mark 123' to determine if the corresponding peripheral components 122', 124' and 126' are ready to service the task. Assuming, of course, the peripheral components 122', 124' and 126' are configured and capable of servicing the task in the first place. At this point, the peripheral components 122', 124' and 126 do not know the specific details about the task that will be dispatched.

If the current number of queued tasks 152' is less than the corresponding level priority mark 123', then the particular sub-controller 158' (e.g., first and second peripheral components 124' and 126') will participate in the selection process by transmitting a high signal "1" on the respective data line (e.g., data lines (dO) and (d1)). On the other hand, if the current number of queued tasks 152' is greater than or equal to the corresponding level priority mark 123', then the particular sub-controller 158' (e.g., third peripheral component 126') will refuse to participate by generally transmitting a low signal "0" on the respective data line (e.g., data line (d2)). Of course, the level priority mark 123' may be set at a different value for each of the peripheral components 122', 124' and 126', and the high "1" signal and low "0" signal may be interchanged.

In the second embodiment, the central controller 148' no longer stores the current number of queued tasks 152 and the maximum number of queued tasks 144 associated with the first embodiment. Instead, the configuration table 150' of the central controller 148' stores the high "1" signal and/or low "0" signals generated by the sub-controllers 158' in addition to storing the bit pattern 154'.

The central controller 148' in processing the response signals dispatch the service command signal to one of the capable peripheral components (e.g., first and second peripheral component 124' and 126') transmitting the high "1" signal in response to the request command. This is where the central controller 148 checks the task vs. the task capability registers of all the peripheral components 122', 124' or 126' reporting a high "1" signal to select the one peripheral component to service the task. Generally, the central controller 148' uses a round robin scheme to dispatch the service command signal to the one capable peripheral component 122', 124' or 126'. For example, the round robin scheme is one where the central controller 148' distributes a first task to the first peripheral component 122' and then a second task to the second peripheral component 124', provided both peripheral components are ready and capable of servicing either task.

Referring to FIGURE 3, there is illustrated a signaling diagram showing a run-time operation on the side-band bus 149 for either embodiment of the load balancing system 50. As described earlier, the side-band bus 149 includes the data lines (d0-d3), the control (CTRL) line and the clock (CLK) line on which transpires the communications (e.g., request, response and service command signals) between the central controller 148 and the sub-controllers 158.

Initially at stage 300, the central controller 148 transmits the request command on the control line (CTRL) and data lines (d0-d3) for soliciting the status of the peripheral queues 146 from the capable peripheral components 122, 124 and 126. At stage 302, a turn around period occurs while the sub-controllers 158 process the request command.

At stage 304, the peripheral components 122, 124 and 126 having unique RIDs 142 with values of "0-3" responds on the assigned data lines (d0-d3). A fourth peripheral component having a RID 142 with a value of "3" is not shown. In the first embodiment, for example, the first peripheral component 122 will transmit the response signal 147 in binary form "011" on the data line (d0). In the second embodiment, the first peripheral component 122' will transmit the response signal 147' having a high "1" signal on the data line (d0). The second and third peripheral components 124 and 126 of either embodiment also transmit the corresponding response signals 147 on data lines (d1 and d2).

At stage 306, another turn around period occurs while the central controller 148 processes all of the response signals 147. Then at stage 308, if required, the peripheral components (not shown) having unique RIDs 142 with values "4-7" respond to the request command on the data lines (d0-d3). Depending on the total number of the peripheral components connected to the side-band bus 149, there may be any number of the stages 306 and 308, thus permitting a scalable protocol. Also, the total number of data lines may be increased (e.g., data lines d0-d8) to enhance the scalable protocol.

After all of the peripheral components 122, 124 and 126 respond to the request command by generating and transmitting the response signals 147, then at stage 310, the central controller 148 dispatches the service command signal on the control (CTRL) line to one of the capable peripheral components 122, 124 or 126. The service command signal will direct the one capable peripheral component 122, 124 or 126 to service the task.

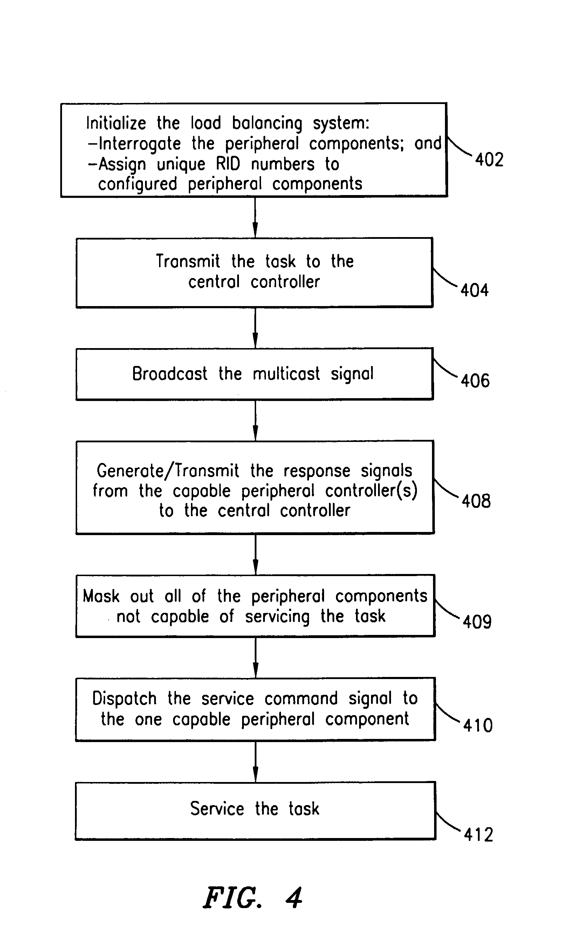

Referring to FIGURE 4, there is illustrated a simplified flow diagram of an exemplary method of operation for the load balancing system 50. As discussed earlier, the operation of the two embodiments of the load balancing system 50 may be performed within the computer system 100 based on the intelligent I2O specification or within any computer system having multiple I/O subsystems.

Beginning at step 402 and upon initialization, the PCI bus enumerator which may be part of the basic input/output system (BIOS) 138 interrogates and scans the PCI configuration register 140 located within each of the peripheral components 122, 124 and 126 to determine which of the peripheral components are configured to participate in the load balancing scheme in the first place. Each of the configured peripheral components 122, 124 and 126 are assigned the unique response identifier (RID) 142.

At step 404, one of the CPUs 102 will transmit the task to the central controller 148.

At step 406, the central controller 148 determines which of the peripheral components 122, 124 and 126 are capable of servicing the task by broadcasting the request command or multicast signal to the capable peripheral components 122, 124 or 126.

At step 408, each of the capable peripheral components 122, 124 or 126 in response to the request command generates and transmits the corresponding response signal 147 to the central controller 148. As described earlier, the response signal 147 may be the current number of queued tasks 152 (first embodiment) or a high/low signal (second embodiment).

At step 409, the central controller 148 then masks out all of the peripheral components that are not capable of servicing the task (e.g., registered to receive dispatch for the specific task).

At step 410, the central controller 148 upon receiving and processing the response signals 147 arbitrates and dispatches the service command signal to the one capable peripheral component 122, 124 or 126, as described above.

At step 412, the one capable peripheral component 122, 124 and 126 upon receiving the service command signal may place the task onto the corresponding peripheral queue 146 until the one capable peripheral component is able to service the task.

From the foregoing, it can be readily appreciated by those skilled in the art that the present invention provides a load balancing system and method for use in a computer system to distribute tasks between multiple I/O subsystems. Also, the load balancing system as disclosed may utilize side-band signaling to provide low overhead load balancing among dedicated I/O processors.

## Claims

1. A computer system having a load balancing system for distributing a task within input/output subsystems, said computer system comprising:
at least one central processing unit for transmitting the task;
a central controller, responsive to the transmitted task, for generating and transmitting a request command;
a side-band bus;
a plurality of peripheral components, each of the peripheral components capable of servicing the request command transmits a response signal over said side-band bus to said central controller; and
said central controller, responsive to the transmitted response signals, for dispatching a service command signal to one of the plurality of peripheral components, where said one peripheral component in response to the service command signal services the task.

2. The computer system of Claim 1, wherein each response signal includes a current number of queued tasks.

3. The computer system of Claim 1, wherein the request command includes a multicast signal.

4. The computer system of Claim 1, wherein each central processing unit includes a basic input/output system for interrogating the plurality of peripheral components to determine which of the peripheral components are configured for load balancing, and for assigning a unique identifier to each of the configured peripheral components.

5. The computer system of Claim 1, wherein said central controller includes a processor for masking out all of the peripheral components not registered to receive the request command to determine which of the plurality of peripheral components are capable of servicing the request command.

6. The computer system of Claim 5, wherein said central controller further includes:
a configuration table for receiving and storing a current number of queued tasks and a maximum number of queued tasks for each capable peripheral component; and
said processor for determining the one of the plurality of peripheral components by comparing the current number of queued tasks to the maximum number of queued tasks for each capable peripheral component.

7. The computer system of Claim 6, wherein said configuration table further includes a configuration space containing a maximum number of queueable tasks register.

8. The computer system of Claim 6, wherein said configuration table further includes a configuration space containing a current number of tasks register.

9. The computer system of Claim 6, wherein said configuration table further includes a task capability register.

10. The computer system of Claim 4, wherein each configured peripheral component includes a peripheral queue for indicating a maximum number of queued tasks using a level priority mark and for storing a current number of queued tasks, where if the current number of queued tasks is less than the maximum number of queued tasks then the respective configured peripheral component transmits the response signal having a predetermined level over said side-band bus to said central controller.

11. The computer system of Claim 4, wherein each configured peripheral component includes a configuration space.

12. The computer system of Claim 11, wherein said configuration space includes a task capability register.

13. The computer system of Claim 11, wherein said configuration space includes a maximum queue depth register.

14. The computer system of Claim 11, wherein said configuration space includes a current queue depth register.

15. A computer system used in a computer for distributing a task, said computer system comprising:
a central controller, responsive to the task, for generating and transmitting a service command signal for servicing the task;
a side-band bus;
a plurality of capable peripheral components coupled by the side-band bus to the central controller; and
said central controller includes a processor for determining which one of the capable peripheral components has a least number of current tasks to be serviced by comparing a current number of queued tasks to a maximum number of queued tasks associated with each capable peripheral component, where said one of the capable peripheral components receives the service command signal.

16. The computer system of Claim 15, wherein said central controller further includes a configuration table for storing the current number of queued tasks, the maximum number of queued tasks, and a bit pattern representative of a class of the plurality of tasks each capable peripheral components is capable of servicing.

17. The computer system of any of Claims 1 to 16, wherein said central controller further includes a central queue for storing the task until anyone of the capable peripheral components has the current number of queued tasks less than the maximum number of queued tasks.

18. The computer system of any of Claims 1 to 17, wherein the side-band bus includes at least one data line, a control line and a clock line.

19. The computer system of Claim 18, wherein the side-band bus further includes a predetermined number of pins for permitting a scalable protocol.

20. The computer system of Claim 1 or claim 15, wherein each configured or capable peripheral component includes a sub-controller coupled to the side-band bus, said sub-controller includes a queue counter connected to a peripheral queue for storing the current number of queued tasks.

21. A method for distributing a task within Input/Output subsystems of a computer system, said method comprising the steps of:
broadcasting a multicast signal to a plurality of peripheral components that are capable of servicing the task;
generating and transmitting, responsive to the multicast signal, a response signal from each of the plurality of capable peripheral components; and
dispatching, responsive to the transmitted response signals, a service command signal for servicing the task to one of the plurality of capable peripheral components.

22. The method of Claim 21, further comprising the steps of:
interrogating the plurality of peripheral components to determine which of the plurality of peripheral components are configured for load balancing;
assigning a unique identifier to each of the configured peripheral components; and
obtaining a maximum number of queued tasks from each of the configured peripheral components.

23. The method of Claim 21, wherein the step of dispatching includes transmitting the service command signal to said one of the plurality of capable peripheral components having a least number of current tasks to be serviced.

24. The method of Claim 23, wherein the step of transmitting the service command signal further includes:
receiving and storing a current number of queued tasks and a maximum number of queued tasks for each capable peripheral component; and
determining the one of the plurality of capable peripheral components having the least number of current tasks to be serviced by comparing the current number of queued tasks to the maximum number of queued tasks for each capable peripheral component.

25. The method of Claim 21, wherein said step of broadcasting further includes masking out all of the peripheral components not registered to receive the task to determine the plurality of capable peripheral components.

26. The method of Claim 21, wherein the step of generating and transmitting a response signal includes comparing within each capable peripheral component a current number of queued tasks to a level priority mark indicative of a maximum number of queued tasks, where if the current number of queued tasks is less than the maximum number of queued tasks then the corresponding capable peripheral component will transmit the response signal having a predetermined level.

27. The method of Claim 21, wherein the step of dispatching further includes delaying the transmission of the service command signal until anyone of the capable peripheral components has the current number of queued tasks less than the maximum number of queued tasks.
